# EUROPEAN PATENT APPLICATION

(11) **EP 3 930 406 A1**
(43) Date of publication of application: **29.12.2021**
(21) Application number: 21185582.0
(22) Date of filing: 12.07.2016
(51) Int. Cl.: H04W 72/12, H04W 28/16, H04L 5/00, H04L 27/26

(54) **METHOD AND NETWORK DEVICE FOR TRANSMITTING DATA**

(62) Divisional of application: 16908432.4
(71) Applicant: GUANGDONG OPPO MOBILE TELECOMMUNICATIONS CORP., LTD., Dongguan, Guangdong 523860 (CN)
(72) Inventor: TANG, Hai, Dongguan, 523860 (CN)
(74) Representative: Manitz Finsterwald Patent- und Rechtsanwaltspartnerschaft mbB

(57) **Abstract**

Disclosed are a method and terminal device for transmitting data. The method comprises: a terminal device detecting downlink control information (DCI) sent by a network device and used for scheduling data; according to said detected DCI, said terminal device determining a basic parameter set used for transmitting said data; according to the basic parameter set and the DCI, the terminal device detecting the data sent by the network device, or transmitting the data to the network device. Therefore, the method and terminal device of the embodiments of the present invention enable the use of different DCI formats to perform scheduling of data transmission on the basis of different basic parameter sets, increasing the flexibility of design of control signaling.

## Description

### TECHNICAL FIELD

The disclosure relates to the field of communications, and more particularly to a method and a terminal device for data transmission.

### BACKGROUND

In the 5th-Generation (5G) mobile communication technology, a user equipment (UE) may support various different basic numerologies (parameter sets) in a single carrier. These different basic numerologies may be multiplexed in a Time Division Multiplex (TDM) or Frequency Division Multiplex (FDM) manner. For example, different frequency-domain resources in the same Transmission Time Interval (TTI) may be allocated for data transmission with different basic numerologies. For reducing complexity in blind detection of a control channel, data transmission with different basic numerologies multiplexed in an FDM manner may be scheduled on the basis of a common control channel, for example, a Physical Downlink Control Channel (PDCCH). Different control information may be required by data transmission based on different basic numerologies. Therefore, how to schedule data transmission based on different basic numerologies is a problem urgent to be solved.

### SUMMARY

Embodiments of the disclosure provide a method for data transmission and a terminal device, which solve the problem of how to schedule data transmission based on different basic numerologies.

A first aspect provides a method for data transmission, which may include that, a terminal device detects Downlink Control Information (DCI) transmitted by a network device and configured to schedule data; the terminal device determines a numerology configured to transmit the data according to the detected DCI; and the terminal device detects the data transmitted by the network device or transmits the data to the network device, according to the numerology and the DCI.

In such a manner, according to the method of the embodiments of the disclosure, data transmission based on different basic numerologies is scheduled by use of different DCI formats, so that flexibility of control signaling design is improved.

In addition, the terminal device is not required to receive the numerology for data transmission to be performed from the network device, so that a downlink signaling overhead may be reduced.

As another embodiment, the operation that the terminal device determines the numerology configured to transmit the data according to the detected DCI may include that, the terminal device determines the numerology configured to transmit the data from multiple predefined basic numerologies according to the detected DCI.

As another embodiment, the operation that the terminal device determines the numerology configured to transmit the data according to the detected DCI may include that, the terminal device determines the numerology configured to transmit the data according to a DCI format of the detected DCI and a mapping relationship between DCI formats and basic numerologies.

As another embodiment, before the operation that the terminal device determines the numerology configured to transmit the data according to the detected DCI, the method may further include that, the terminal device receives indication information transmitted by the network device, the indication information being configured to indicate the mapping relationship between the DCI formats and the basic numerologies.

As another embodiment, the operation that the terminal device determines the numerology configured to transmit the data according to the detected DCI may include that, the terminal device determines the numerology configured to transmit the data according to a Cyclic Redundancy Check (CRC) code of the detected DCI.

It is to be understood that the mapping relationship between the basic numerologies and the DCI formats may be determined by the network device or may be predetermined between the network device and the terminal device.

As another embodiment, different DCI formats may correspond to different control information lengths, and/or DCI format indication bits in different DCI formats may indicate different information.

As another embodiment, when different DCI formats correspond to different basic numerologies and the different DCI formats include a same control information field, the same control information field may occupy different numbers of bits in different DCI and/or the same control information field may indicate different contents in the different DCI formats.

A length of the DCI is the total number of bits of control information in the DCI, and a content of the DCI is a control information field in the DCI and a content indicated by each control information field.

That is, different basic numerologies correspond to different DCI formats and different DCI formats may be distinguished through at least one of lengths of DCI, contents of control information in the DCI, lengths of control information fields and contents indicated by the control information fields. Namely, lengths of DCI corresponding to different DCI formats are different, and/or contents of control information in the DCI corresponding to different DCI formats are different, and/or, for the same control information field, the same control information field in the DCI corresponding to different DCI formats occupies different numbers of bits, and/or, for the same control information field, the same control information field in the DCI corresponding to different DCI formats indicates different contents.

As another embodiment, the control information field may include at least one of the following: a control information field configured to indicate physical resource allocation, a control information field configured to indicate an Acknowledgment (ACK)/Negative Acknowledgment (NACK) feedback timing, a control information field configured to indicate frequency hopping configuration, a control information field configured to indicate a Modulation Coding Scheme (MCS), a control information field configured to indicate a subframe structure, or a control information field configured to indicate Demodulation Reference Signal (DMRS) configuration.

The control information field configured to indicate physical resource allocation may be, for example, a Resource Block (RB) allocation information field configured to indicate a Physical Resource Block (PRB) occupied by data transmission scheduled by the DCI; the control information field configured to indicate the ACK/NACK feedback timing indicates a timing relationship between data transmission and corresponding ACK/NACK feedback, for example, a subframe number offset between a subframe for data transmission and a subframe for corresponding ACK/NACK feedback; the control information field configured to indicate the frequency hopping configuration is, for example, a control information field configured to indicate frequency-domain frequency hopping; the control information field configured to indicate the DMRS is, for example, a control information field configured to indicate information of a port, scrambling sequence and the like for a DMRS; and the control information field configured to indicate the subframe structure is, for example, a total number of Orthogonal Frequency Division Multiplexing (OFDM) symbols in a subframe, or a number or location of Guard Periods (GPs) in the subframe or a number configuration of OFDM symbols of different types in the subframe, for example, a number or proportion configuration of downlink control symbols, downlink data symbols and uplink control symbols in the subframe or a number or proportion configuration of the downlink control symbols and uplink data symbols in the subframe.

As another embodiment, the numerology may include at least one of the following parameters: a subcarrier spacing, a number of subcarriers under a specific bandwidth, a number of subcarriers in a PRB, an OFDM symbol length, a number of points of Fourier transform or inverse Fourier transform configured to generate an OFDM signal, a number of OFDM symbols in a TTI, the number of TTIs in a specific time length and a length of a signal prefix.

The subcarrier spacing is a frequency interval between adjacent subcarriers, for example, 15kHz and 60kHz; the number of subcarriers under the specific bandwidth is, for example, a number of subcarriers corresponding to each possible system bandwidth; the number of subcarriers in the PRB may typically be, for example, an integral multiple of 12; the number of OFDM symbols in the TTI may typically be, for example, an integral multiple of 14; the number of the TTIs in a certain time unit may be the number of TTIs in a time length of 1ms or 10ms; and the signal prefix length is, for example, a time length of a Cyclic Prefix (CP) of a signal or whether the CP uses a normal CP or an extended CP.

A second aspect provides a terminal device, which may be configured to execute each process executed by the terminal device in the method for data transmission in the first aspect and each implementation. The terminal device includes: a detection module, configured to detect DCI transmitted by a network device and configured to schedule data; a determination module, configured to determine a numerology configured to transmit the data according to the detected DCI, the numerology including at least one resource parameter configured to determine a time-frequency resource for transmitting the data; and a transmission module, configured to detect the data transmitted by the network device or transmit the data to the network device according to the numerology and the DCI.

A third aspect provides a terminal device, which may be configured to execute each process executed by the terminal device in the method for data transmission in the first aspect and each implementation. The terminal device includes: a processor, configured to detect DCI transmitted by a network device and configured to schedule data and determine a numerology configured to transmit the data according to the detected DCI, the numerology including at least one resource parameter configured to determine a time-frequency resource for transmitting the data; and a transceiver, configured to detect the data transmitted by the network device or transmit the data to the network device according to the numerology and the DCI.

A fourth aspect provides a computer chip, which includes an input interface, an output interface, at least one processor and a memory. The processor is configured to execute a code in the memory, and when the code is executed, the processor may implement each process executed by a terminal device in a method for data transmission in the first aspect and each implementation.

A fifth aspect provides a computer-readable storage medium, which stores a program, wherein the program enables a terminal device to execute any method for data transmission in the first aspect and each implementation thereof.

### BRIEF DESCRIPTION OF DRAWINGS

In order to describe the technical solutions of the embodiments of the disclosure more clearly, the drawings required to be used in the embodiments of the disclosure will be simply introduced below. It is apparent that the drawings described below are only some embodiments of the disclosure. Other drawings may further be obtained by those of ordinary skill in the art according to these drawings without creative work.
FIG. 1 illustrates a schematic diagram of an application scenario according to an embodiment of the disclosure.
FIG. 2 illustrates an interaction flowchart of a method for data transmission according to an embodiment of the disclosure.
FIG. 3 illustrates an interaction flowchart of a method for data transmission according to another embodiment of the disclosure.
FIG. 4 illustrates an interaction flowchart of a method for data transmission according to another embodiment of the disclosure.
FIG. 5 illustrates a structure block diagram of a terminal device according to an embodiment of the disclosure.
FIG. 6 illustrates a structure block diagram of a terminal device according to an embodiment of the disclosure.
FIG. 7 illustrates a schematic structure diagram of a system chip according to another embodiment of the disclosure.

### DETAILED DESCRIPTION

The technical solutions in the embodiments of the disclosure will be clearly and completely described below in combination with the drawings in the embodiments of the disclosure. It is apparent that the described embodiments are not all embodiments but part of embodiments of the disclosure. All other embodiments obtained by those of ordinary skill in the art on the basis of the embodiments in the disclosure without creative work shall fall within the scope of protection of the disclosure.

It is to be understood that the technical solutions of the embodiments of the disclosure may be applied to various communication systems, for example, a present communication system of a Global System of Mobile Communication (GSM), a Code Division Multiple Access (CDMA) system, a Wideband Code Division Multiple Access (WCDMA) system, a General Packet Radio Service (GPRS), a Long Term Evolution (LTE) system, a Universal Mobile Telecommunication System (UMTS) and the like, and are particularly applied to a future 5G system.

In the embodiments of the disclosure, a terminal device may also be UE, an access terminal, a user unit, a user station, a mobile station, a mobile radio station, a remote station, a remote terminal, a mobile device, a user terminal, a terminal, a wireless communication device, a user agent or a user device. The access terminal may be a cell phone, a cordless phone, a Session Initiation Protocol (SIP) phone, a Wireless Local Loop (WLL) station, a Personal Digital Assistant (PDA), a handheld device with a wireless communication function, a computing device, another processing device connected to a wireless modem, a vehicle-mounted device, a wearable device, a terminal device in a future 5G network, a terminal device in a future evolved Public Land Mobile Network (PLMN) or the like.

In the embodiments of the disclosure, a network device may be a device configured to communicate with the terminal device. The network device may be a Base Transceiver Station (BTS) in the GSM or the CDMA, may also be a NodeB (NB) in the WCDMA system, may also be an Evolutional Node B (eNB or eNodeB) in the LTE system and may further be a wireless controller in a Cloud Radio Access Network (CRAN) scenario. Or the network device may be a relay station, an access point, a vehicle-mounted device, a wearable device, a network device in the future 5G network, a network device in the future evolved PLMN or the like.

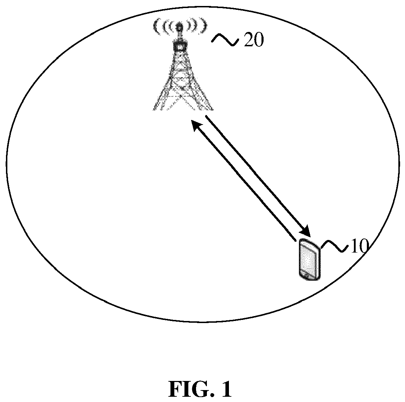

FIG. 1 illustrates a schematic diagram of an application scenario according to the disclosure. A communication system in FIG. 1 may include a terminal device 10 and a network device 20. The network device 20 is configured to provide a communication service for the terminal device 10 for access to a core network. The terminal device 10 searches for a synchronization signal, broadcast signal and the like transmitted by the network device 20 to access the network, thereby communicating with the network. Arrows illustrated in FIG. 1 may represent uplink/downlink transmission implemented through a cellular link between the terminal device 10 and the network device 20. According to the embodiment of the disclosure, data transmission based on different basic numerologies is scheduled in a common control channel by use of different DCI formats, so that flexibility of control signaling design may be improved.

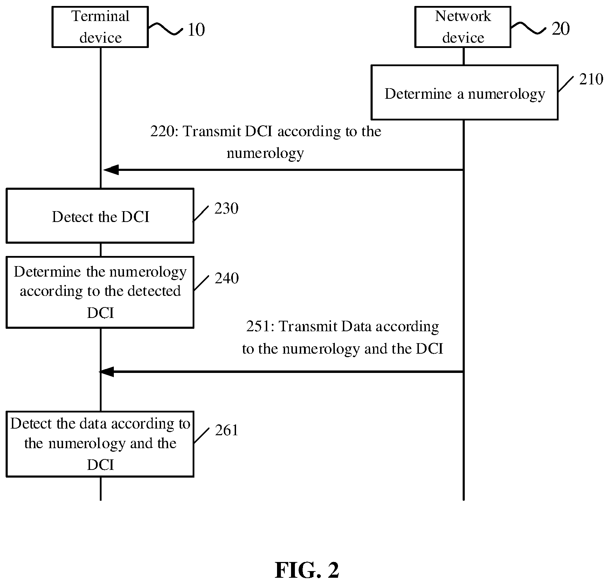

FIG. 2 is a schematic flowchart of a method for data transmission according to an embodiment of the disclosure. A terminal device 10 and a network device 20 are illustrated in FIG. 2. As illustrated in FIG. 2, a specific flow for data transmission includes the following operations.

In 210, the network device 20 determines a numerology configured to transmit data.

For example, the network device 20 may determine the numerology configured for data transmission from multiple predefined basic numerologies. Therefore, the DCI transmitted to the terminal device 10 may be determined according to the numerology.

The numerology may include at least one resource parameter configured to determine a time-frequency resource for transmitting the data.

Alternatively, the numerology may include at least one of the following parameters: a subcarrier spacing, a number of subcarriers under a specific bandwidth, a number of subcarriers in a PRB, a length of an OFDM symbol, a number of points of Fourier transform, for example, Fast Fourier Transform (FFT), or inverse Fourier transform, for example, Inverse Fast Fourier Transform (IFFT), configured to generate an OFDM signal, a number of OFDM symbols in a TTI, the number of TTIs in a specific time length, or a length of a signal prefix.

The subcarrier spacing is a frequency interval between adjacent subcarriers, for example, 15kHz and 60khz. The number of subcarriers under the specific bandwidth is, for example, the number of subcarriers corresponding to each possible system bandwidth. The number of subcarriers in the PRB may typically be, for example, an integral multiple of 12. The number of OFDM symbols in the TTI may typically be, for example, an integral multiple of 14. The number of the TTIs in a certain time unit may be the number of TTIs in a time length of 1ms or 10ms. The length of a signal prefix is, for example, a time length of a CP of a signal or whether the CP uses a normal CP or an extended CP.

In 220, the network device 20 transmits DCI configured to schedule the data to the terminal device 10 according to the numerology.

Specifically, in the embodiment of the disclosure, multiple different basic numerologies may be supported in the same carrier. These different basic numerologies may be multiplexed in a TDM or FDM manner. For example, different frequency-domain resources in the same TTI may be allocated for data transmission based on different basic numerologies, or different TTIs may be configured for data transmission based on different basic numerologies. Data transmission based on different basic numerologies may be scheduled through a common control channel or an independent control channel. The network device 20, after determining the numerology, may transmit the DCI configured to schedule the data to the terminal device 10 according to the numerology.

It is to be understood that the network device 20 may select a proper channel to schedule data based on different basic numerologies according to different requirements. The network device 20 may schedule the data based on different basic numerologies in the common control channel. For example, the network device 20 transmits the DCI configured to schedule the data to the terminal device 10 through a Physical Downlink Control Channel (PDCCH). The network device 20 may also schedule the data based on different basic numerologies through the independent control channel. There are no limits made herein.

Alternatively, the network device 20 may transmit the DCI configured to schedule the data to the terminal device 10 according to at least one parameter in the numerology. Or, the network device 20 may determine a DCI format of the DCI according to the numerology and a mapping relationship between basic numerologies and DCI formats and transmit the DCI configured to schedule the data to the terminal device 10 according to the DCI format.

Specifically, the network device 20 may determine a physical resource for the DCI configured to schedule the data on the basis of at least one parameter in the numerology and then transmit the DCI configured to schedule the data to the terminal device 10 on the determined physical resource. For example, the network device 20 may determine the number of subcarriers and the number of PRBs occupied by the control channel bearing the DCI on the basis of the subcarrier spacing in the numerology, thereby transmitting the DCI to the terminal device 10 in the control channel on the corresponding subcarriers and PRBs.

The network device 20 may also determine the DCI format of the DCI configured to schedule the data according to the determined numerology and the mapping relationship between the basic numerologies and the DCI formats, and transmit the DCI configured to schedule the data to the terminal device 10 according to the DCI format.

For example, if the numerology includes the subcarrier spacing, the mapping relationship between the basic numerologies and the DCI formats may be illustrated in Table 1. A subcarrier spacing used for data transmission on a first frequency band is 15kHz and a corresponding DCI format is a DCI format 1. A subcarrier spacing used for data transmission on a second frequency band is 30KHz and a corresponding DCI format is a DCI format 2. A subcarrier spacing used for data transmission on a third frequency band is 60kHz and a corresponding DCI format is a DCI format 3. A subcarrier spacing used for data transmission on a fourth frequency band is 120kHz and a corresponding DCI format is a DCI format 4.

**Table 1**

| Subcarrier spacing | DCI format |
|---|---|
| 15kHz | DCI format 1 |
| 30kHz | DCI format 2 |
| 60kHz | DCI format 3 |
| 120kHz | DCI format 4 |

For a fixed system bandwidth, different subcarrier spacings correspond to different number of subcarriers and also correspond to different total numbers of downlink PRBs and different numbers of bits required by frequency-domain resource allocation. The numbers of bits of frequency-domain resource allocation fields in the DCI formats corresponding to different subcarrier spacings are different, and total numbers of bits of different DCI formats are also different. For example, if the numbers of bits in the frequency-domain resource allocation fields in each DCI format are M, M-k, M-2k and M-3k, the numbers of bits of control information in the four DCI formats are N, N-k, N-2k and N-3k respectively.

The network device 20 may also determine the DCI format of the DCI configured to schedule the data according to the determined numerology and the mapping relationship between the basic numerologies and the DCI formats, thereby transmitting the DCI to the terminal device 10 according to the DCI format.

In such a manner, data transmission based on different basic numerologies may be scheduled by use of different DCI formats, so that flexibility of control signaling design is improved.

It is to be understood that the mapping relationship between the basic numerologies and the DCI formats may be determined by the network device 20, or may be predetermined between the network device 20 and the terminal device 10.

In 230, the terminal device 10 detects the DCI configured to schedule the data.

Specifically, the terminal device 10 detects the DCI transmitted by the network device 20 and configured to schedule the data. For example, the terminal device may detect the DCI configured to schedule the data on the basis of different DCI formats until the DCI is correctly detected according to a certain DCI format.

In 240, the terminal device 10 determines the numerology configured to transmit the data according to the detected DCI.

Specifically, the terminal device 10, after detecting the DCI on the basis of a possible DCI format, may determine the numerology configured to transmit the data according to the detected DCI.

In such a manner, the network device 20 is not required to notify the terminal device 10 of the numerology for data transmission to be performed, so that a downlink signaling overhead may be reduced.

Alternatively, the terminal device 10 may determine the numerology configured to transmit the data according to a CRC code (which may be called a CRC code) of the detected DCI. For example, the terminal device 10 may determine the numerology configured to transmit the data according to a length of the CRC code or a content of the CRC code.

Alternatively, the terminal device 10 may further determine the numerology configured to transmit the data according to a DCI format of the detected DCI and a mapping relationship between DCI formats and basic numerologies.

For example, possible formats of the DCI configured to schedule the data include a DCI format 1, a DCI format 2, a DCI format 3 and a DCI format 4. The terminal device detects the DCI transmitted by the network device 20 through the PDCCH on the basis of these possible DCI formats. As illustrated in Table 1, each of the four DCI formats may correspond to a respective size of a subcarrier spacing. If the terminal device 10 correctly detects the DCI transmitted by the network device 20 on the basis of the DCI format 1, the terminal device 10 determines that a subcarrier spacing corresponding to the detected DCI format 1 is 15kHz according to a mapping relationship, illustrated in Table 1, between DCI formats and subcarrier spacings. The terminal device 10 detects a Physical Downlink Shared Channel (PDSCH) scheduled by the detected DCI according to the determined subcarrier spacing. For example, the terminal device 10 may determine the number of subcarriers and the number of PRBs on the first frequency band, the number of time-domain sampling points corresponding to an OFDM symbol, and the number of OFDM symbols in a TTI, according to the subcarrier spacing. Then, the data scheduled by the DCI is detected according to these parameters and the control information in the DCI.

For another example, the possible formats of the DCI configured to schedule the data include the DCI format 1, the DCI format 2, the DCI format 3 and the DCI format 4. The mapping relationship between the DCI formats and the basic numerologies is illustrated in Table 2. The terminal device 10 detects the DCI transmitted by the network device 20 through the PDCCH on the basis of these possible DCI formats. Numbers of bits of the control information of the four DCI formats are the same, and different DCI formats are distinguished by the first two control information bits. If the terminal device 10, after correctly detecting the DCI transmitted by the network device 20 on the basis of the DCI format 2, determines that a numerology corresponding to the detected DCI format 2 is a second numerology according to the predetermined mapping relationship between the DCI formats and the basic numerologies, the terminal device 10 detects the PDSCH scheduled by the detected DCI according to a parameter in the determined second numerology. For example, a terminal may determine a parameter for detecting the PDSCH scheduled by the DCI according to a subcarrier spacing, the total number of subcarriers and a length of a channel prefix in the numerology in combination with other control information in the DCI, to detect the PDSCH scheduled by the DCI.

**Table 2**

| DCI format | Numerology |
|---|---|
| DCI format 1 | First numerology |
| DCI format 2 | Second numerology |
| DCI format 3 | Third numerology |
| DCI format 4 | Fourth numerology |

Alternatively, different DCI formats correspond to different control information lengths, and/or DCI format indication bits in different DCI formats indicate different information.

Alternatively, if different DCI formats correspond to different basic numerologies and the different DCI formats include the same control information field, the same control information field occupies different numbers of bits in different DCI and/or the same control information field indicates different contents in the different DCI formats.

A length of the DCI is the total bit number of control information in the DCI and a content of the DCI is a control information field in the DCI and a content indicated by each control information field.

Specifically, different DCI formats correspond to different basic numerologies, and different DCI formats may be distinguished through at least one of lengths of DCI, contents of control information in the DCI, lengths of control information fields and contents indicated by the control information fields. Namely, lengths of DCI corresponding to different DCI formats are different, and/or contents of control information in the DCI corresponding to different DCI formats are different, and/or, for the same control information field, the same control information field in the DCI corresponding to different DCI formats occupies different numbers of bits, and/or, for the same control information field, the same control information field in the DCI corresponding to different DCI formats indicates different contents.

Different DCI formats may correspond to different DCI lengths. For example, a DCI format corresponding to the first numerology is the DCI format 1, a DCI format corresponding to the second numerology is the DCI format 2 and the DCI format 1 and the DCI format 2 include different numbers of information bits. Contents of control information in DCI corresponding to different DCI formats may be different. For example, the DCI format corresponding to the first numerology is the DCI format 1, the DCI format corresponding to the second numerology is the DCI format 2, and the DCI format 1, compared with the DCI format 2, includes one more control information field. For the same control information field, the same control information field in the DCI corresponding to different DCI formats may occupy different numbers of bits. For example, the DCI format corresponding to the first numerology is the DCI format 1, the DCI format corresponding to the second numerology is the DCI format 2, both of the DCI format 1 and the DCI format 2 include control information fields configured to indicate RB allocation, but numbers of bits of the control information fields configured to indicate RB allocation are different because the two basic numerologies correspond to different frequency-domain resource regions. For the same control information field, contents indicated by the same control information field in the DCI corresponding to different DCI formats may also be different. For example, the DCI format corresponding to the first numerology is the DCI format 1, the DCI format corresponding to the second numerology is the DCI format 2, a DCI format corresponding to a third numerology is the DCI format 3, a DCI format corresponding to a fourth numerology is the DCI format 4, and each of the four DCI formats includes a 2-bit control information field indicating an ACK/NACK feedback timing, to indicate a timing relationship between data transmission and a corresponding ACK/NACK. For the DCI format 1 corresponding to the first numerology, four possible timings indicated by the control information field are {0, 1, 2, 3}. For the DCI format 2 corresponding to the second numerology, four possible timings indicated by the control information field are {0, 2, 4, 6}. For the DCI format 3 corresponding to the third numerology, four possible timings indicated by the control information field are {0, 3, 6, 9}. For the DCI format 4 corresponding to the fourth numerology, four possible timings indicated by the control information field are {0, 4, 8, 12}. The contents indicated by the control information fields in different DCI corresponding to different basic numerologies are different.

For example, the mapping relationship between the DCI formats and the basic numerologies may be illustrated in Table 2. When the DCI format is the DCI format 1, the corresponding numerology is the first numerology. When the DCI format is the DCI format 2, the corresponding numerology is the second numerology. When the DCI format is the DCI format 3, the corresponding numerology is the third numerology. When the DCI format is the DCI format 4, the corresponding numerology is the fourth numerology. After the terminal device 10 detects the DCI transmitted by the network device 20 on the basis of the DCI format 2, the terminal device 10 may determine that the numerology for data transmission is the second numerology according to the mapping relationship between the DCI formats and the basic numerologies. The numerology may include parameters such as the subcarrier spacing, the number of subcarriers under a present system bandwidth and the length of the signal prefix. The network device 20 may pre-send parameter configuration conditions of the first numerology, the second numerology, the third numerology and the fourth numerology to the terminal device 10, and the terminal device 10 receives the parameter configuration conditions of the basic numerologies. There is made such a hypothesis that each of the four DCI formats includes the 2-bit control information field configured to indicate the ACK/NACK feedback timing, specifically indicating a subframe offset between a data transmission subframe and an ACK/NACK feedback subframe. Alternatively, the control information field in different DCI formats may occupy different numbers of bits. For example, numbers of bits of the control information in the DCI format 1 and the DCI format 3 are the same (set to be M), and numbers of bits of the control information in the DCI format 2 and the DCI format 4 are the same (set to be N). Alternatively, for different DCI formats corresponding to different parameter configuration sets, each of them may include a 2-bit control information field configured to indicate ACK/NACK feedback timing, but the 2-bit control information fields configured to indicate the ACK/NACK feedback timing may indicate different contents, for example, as illustrated in Table 3.

**Table 3**

| DCI format | Indicated subframe offset value |
|---|---|
| DCI format 1 | {0, 1, 2, 3} |
| DCI format 2 | {0, 2, 4, 6} |
| DCI format 3 | {0, 3, 6, 9} |
| DCI format 4 | {0, 4, 8, 12} |

After the terminal device 10 detects the DCI transmitted by the network device 20 on the basis of a certain DCI format, the terminal device 10 may determine at least one of a length of the DCI, a content of the control information in the DCI, a number of bits occupied by a certain control information field in the DCI and a content indicated by a certain control information field in the DCI, and determine the numerology configured to transmit the data according to the mapping relationship between the DCI formats and the basic numerologies.

Alternatively, the control information field in the DCI format may include at least one of: a control information field configured to indicate physical resource allocation, a control information field configured to indicate an ACK/NACK feedback timing, a control information field configured to indicate frequency hopping configuration, a control information field configured to indicate an MCS, a control information field configured to indicate a subframe structure and a control information field configured to indicate DMRS configuration.

The control information field configured to indicate physical resource allocation may be, for example, an RB allocation information field configured to indicate PRBs occupied by data transmission scheduled by the DCI. The control information field configured to indicate the ACK/NACK feedback timing indicates a timing relationship between data transmission and corresponding ACK/NACK feedback, for example, a subframe number offset between a subframe for data transmission and a subframe for corresponding ACK/NACK feedback. The control information field configured to indicate the frequency hopping configuration is, for example, a control information field configured to indicate frequency-domain frequency hopping. The control information field configured to indicate the DMRS is, for example, a control information field configured to indicate information of a port, scrambling sequence and the like for a DMRS. The control information field configured to indicate the subframe structure is, for example, the total number of OFDM symbols of a subframe, or the number or location of GPs in the subframe or configuration of the number of OFDM symbols of different types in the subframe, for example, configuration of the number or proportion of downlink control symbols, downlink data symbols and uplink control symbols in the subframe or configuration of the number or proportion of the downlink control symbols and uplink data symbols in the subframe.

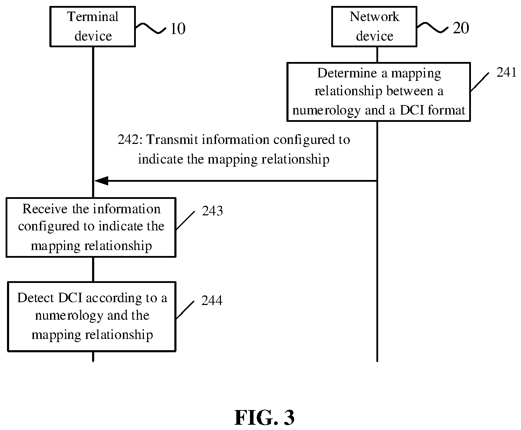

Alternatively, the method 240 may further include operations 241 to 244. FIG. 3 is a schematic flowchart of a method for data transmission according to another embodiment of the disclosure. The method includes operations 241 to 244. 240 may be replaced with operations 241 to 244.

In 241, the network device 20 determines the mapping relationship between the DCI formats and the basic numerologies.

In 242, the network device 20 transmits indication information configured to indicate the mapping relationship to the terminal device 10.

In 243, the terminal device 10 receives the indication information configured to indicate the mapping relationship from the network device 20.

In 244, the terminal device 10 determines the numerology according to the detected DCI and the mapping relationship.

Specifically, the network device 20 may determine and pre-indicate the mapping relationship, required by determination of the numerology, between the basic numerologies and the DCI formats to the terminal device 10. For example, the network device 20 transmits the indication information to the terminal device 10 through high-layer signaling, the indication information being configured to indicate the mapping relationship between the basic numerologies and the DCI formats. The terminal device 10, after receiving the indication information indicating the mapping relationship, determines the numerology configured to schedule the data according to the detected DCI and the mapping relationship between the DCI formats and the basic numerologies.

It is to be understood that, when the terminal device 10 determines the numerology configured to schedule the data, the terminal device 10 may use a mapping relationship between the DCI formats and the basic numerologies predetermined by the terminal device 10 and the network device 20. For example, the terminal device 10 determines the numerology corresponding to the DCI format according to the mapping relationship, specified in a protocol, between the DCI format and the numerology.

In 251, the network device 20 transmits the data to the terminal device 10 according to the numerology and the DCI.

Specifically, the network device 20 transmits the data to the terminal device 10 according to the parameter in the numerology and the content of the control information in the DCI configured to schedule the data.

In 261, the terminal device 10 detects the data transmitted by the network device 20 according to the numerology and the DCI.

Specifically, the terminal device 10 detects the data transmitted by the network device 20 according to the parameter in the numerology and the content of the control information in the detected DCI configured to schedule the data.

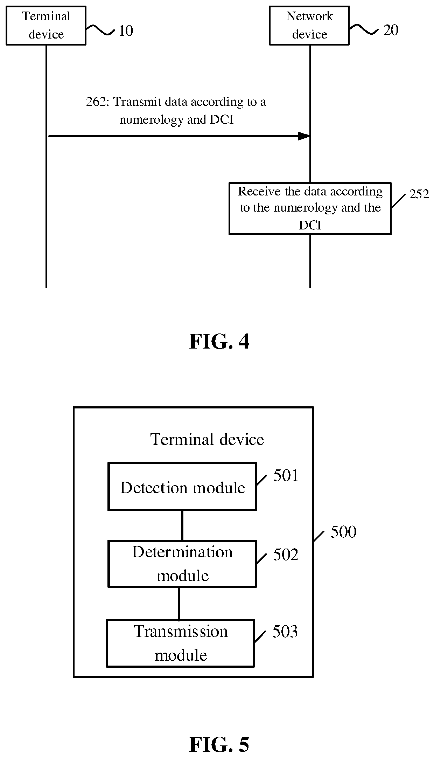

Alternatively, operations 251 and 261 may further be replaced with operations 252 and 262 in FIG. 4 respectively. FIG. 4 illustrates an interaction flowchart of a method for data transmission according to another embodiment of the disclosure.

In 262, the terminal device 10 transmits the data to the network device 20 according to the parameter in the numerology and the content of the control information in the detected DCI configured to schedule the data.

In 252, the network device 20 receives the data transmitted by the terminal device 10 according to the numerology and the DCI.

Specifically, in 250 and 260, the data may include uplink data or downlink data. If the data to be transmitted is the downlink data, the network device 20 transmits the data to the terminal device 10, the DCI is DCI configured to schedule the downlink data, and the terminal device 10 detects related information about the downlink data transmitted by the network device 20, thereby correctly receiving the data, that is, operations 251 and 261 are executed. If the data to be transmitted is the uplink data, the terminal device 10 transmits the data to the network device 20, the DCI is DCI configured to schedule the uplink data, and the network device 20 receives the data transmitted by the terminal device 10, that is, operations 262 and 252 are executed.

It is to be understood that data transmission between the network device 20 and the terminal device 10 in the embodiment of the disclosure may include service data transmission or may include control signaling transmission. There are no limits made herein.

In such a manner, according to the method of the embodiment of the disclosure, data transmission based on different basic numerologies is scheduled by use of different DCI formats, so that flexibility of control signaling design is improved.

In addition, the terminal device is not required to receive information about the numerology for data transmission to be performed from the network device, so that the downlink signaling overhead may be reduced.

It is to be understood that, in various embodiments of the disclosure, a magnitude of a sequence number of each process does not mean an execution sequence and the execution sequence of each process should be determined by its function and an internal logic and should not form any limit to an implementation process of the embodiments of the disclosure.

The method for data transmission according to the embodiments of the disclosure is described above in detail. A terminal device and network device according to the embodiments of the disclosure will be described below. It is to be understood that the network device and terminal device of the embodiments of the disclosure may execute various methods in the abovementioned embodiments of the disclosure. That is, the following specific working process of each device may be the corresponding process in the method embodiments.

FIG. 5 is a schematic block diagram of a terminal device 500 according to an embodiment of the disclosure. As illustrated in FIG. 5, the terminal device 500 includes a detection module 501, a determination module 502 and a transmission module 503.

The detection module 501 is configured to detect DCI transmitted by a network device and configured to schedule data.

The determination module 502 is configured to determine a numerology configured to transmit the data according to the DCI detected by the detection module 501, the numerology including at least one resource parameter configured to determine a time-frequency resource for transmitting the data.

The transmission module 503 is configured to detect the data transmitted by the network device or transmit the data to the network device according to the numerology determined by the determination module 502 and the DCI detected by the detection module 501.

Alternatively, the determination module 502 is specifically configured to determine the numerology configured to transmit the data from multiple predefined basic numerologies according to the detected DCI.

Alternatively, the determination module 502 is specifically configured to determine the numerology configured to transmit the data according to a DCI format of the detected DCI and a mapping relationship between DCI formats and basic numerologies.

Alternatively, before the determination module 502 determines the numerology configured to transmit the data according to the detected DCI, the transmission module 503 is further configured to receive indication information transmitted by the network device, the indication information being configured to indicate the mapping relationship between the DCI formats and the basic numerologies.

Alternatively, the determination module 502 is specifically configured to determine the numerology configured to transmit the data according to a CRC code of the detected DCI.

Alternatively, different DCI formats correspond to different control information lengths, and/or DCI format indication bits in different DCI formats indicate different information.

Alternatively, if different DCI formats correspond to different basic numerologies and the different DCI formats include the same control information field, the same control information field occupies different numbers of bits in different DCI and/or the same control information field indicates different contents in the different DCI formats.

Alternatively, the control information field includes at least one of a control information field configured to indicate physical resource allocation, a control information field configured to indicate an ACK/NACK feedback timing, a control information field configured to indicate frequency hopping configuration, a control information field configured to indicate an MCS, a control information field configured to indicate a subframe structure and a control information field configured to indicate DMRS configuration.

Alternatively, the numerology includes at least one of the following parameters: a subcarrier spacing, a number of subcarriers under a specific bandwidth, a number of subcarriers in a PRB, a length of an OFDM symbol, a number of points of Fourier transform or inverse Fourier transform configured to generate an OFDM signal, a number of OFDM symbols in a TTI, the number of TTIs in a specific time length and a length of a signal prefix.

In such a manner, according to the terminal device of the embodiment of the disclosure, data transmission based on different basic numerologies is scheduled by use of different DCI formats, so that flexibility of control signaling design is improved.

In addition, the terminal device is not required to receive the numerology for data transmission to be performed from the network device, so that a downlink signaling overhead may be reduced.

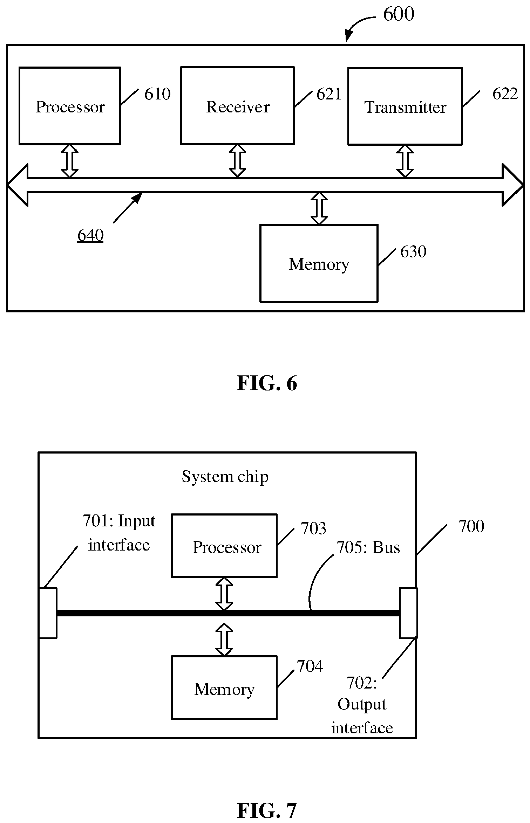

It is to be noted that, in the embodiment of the disclosure, the detection module 501 and the determination module 502 may be implemented by a processor and the transmission module 503 may be implemented by a transceiver. As illustrated in FIG. 6, a terminal device 600 may include a processor 610, a transceiver 620 and a memory 630. The transceiver 620 may include a receiver 621 and a transmitter 622. The memory 630 may be configured to store a numerology, a DCI format, a mapping relationship between basic numerologies and DCI formats and the like, and may further be configured to store codes executed by the processor 610 and the like. Each component in the terminal device 600 is coupled together through a bus system 640. The bus system 640 includes a data bus, and further includes a power bus, a control bus, a state signal bus and the like. The processor 610 is specifically configured to detect DCI transmitted by a network device and configured to schedule data, and determine a numerology configured to transmit the data according to the DCI detected by the processor 610, the numerology including at least one resource parameter configured to determine a time-frequency resource for transmitting the data.

The transceiver 620 is configured to detect the data transmitted by the network device or transmit the data to the network device according to the numerology determined by the processor 610 and the DCI detected by the processor 610.

Alternatively, the processor 610 is specifically configured to determine the numerology configured to transmit the data from multiple predefined basic numerologies according to the detected DCI.

Alternatively, the processor 610 is specifically configured to determine the numerology configured to transmit the data according to a DCI format of the detected DCI and a mapping relationship between DCI formats and basic numerologies. Alternatively, before the numerology configured to transmit the data is determined according to the detected DCI, the transceiver 620 is further configured to receive indication information transmitted by the network device, the indication information being configured to indicate the mapping relationship between the DCI formats and the basic numerologies.

Alternatively, the processor 610 is specifically configured to determine the numerology configured to transmit the data according to a CRC code of the detected DCI.

Alternatively, different DCI formats correspond to different control information lengths, and/or DCI format indication bits in different DCI formats indicate different information.

Alternatively, if different DCI formats correspond to different basic numerologies and the different DCI formats include the same control information field, the same control information field occupies different numbers of bits in different DCI and/or the same control information field indicates different contents in the different DCI formats.

Alternatively, the control information field includes at least one of a control information field configured to indicate physical resource allocation, a control information field configured to indicate an ACK/NACK feedback timing, a control information field configured to indicate frequency hopping configuration, a control information field configured to indicate an MCS, a control information field configured to indicate a subframe structure and a control information field configured to indicate DMRS configuration.

Alternatively, the numerology includes at least one of the following parameters: a subcarrier spacing, a number of subcarriers under a specific bandwidth, a number of subcarriers in a PRB, a length of an OFDM symbol, a number of points of Fourier transform or inverse Fourier transform configured to generate an OFDM signal, a number of OFDM symbols in a TTI, the number of TTIs in a specific time length and a length of a signal prefix.

FIG. 7 illustrates a schematic structure diagram of a system chip according to an embodiment of the disclosure. The system chip 700 of FIG. 7 includes an input interface 701, an output interface 702, at least one processor 703 and a memory 704. The input interface 701, the output interface 702, the processor 703 and the memory 704 are connected through a bus 705. The processor 703 is configured to execute a code in the memory 704. When the code is executed, the processor 703 implements the method executed by the terminal device 10 in FIG. 2 to FIG. 4.

The terminal device 500 illustrated in FIG. 5 or the terminal device 600 illustrated in FIG. 6 or the system chip 700 illustrated in FIG. 7 may implement each process implemented by the terminal device 20 in the method embodiments of FIG. 2 to FIG. 4. No more elaborations will be made herein to avoid repetitions.

It is to be understood that the processor in the embodiment of the disclosure may be an integrated circuit chip and has a signal processing capability. In an implementation process, each step of the method embodiments may be completed by an integrated logical circuit of hardware in the processor or an instruction in a software form. The processor may be a universal processor, a Digital Signal Processor (DSP), an Application Specific Integrated Circuit (ASIC), a Field Programmable Gate Array (FPGA) or another programmable logical device, discrete gate or transistor logical device and discrete hardware component. Each method, step and logical block diagram disclosed in the embodiments of the disclosure may be implemented or executed. The universal processor may be a microprocessor or the processor may also be any conventional processor and the like. The operations of the methods disclosed in combination with the embodiments of the disclosure may be directly embodied to be executed and completed by a hardware decoding processor or executed and completed by a combination of hardware and software modules in the decoding processor. The software module may be located in a mature storage medium in this field such as a Random Access Memory (RAM), a flash memory, a Read-Only Memory (ROM), a Programmable ROM (PROM) or Electrically Erasable PROM (EEPROM) and a register. The storage medium is located in a memory, and the processor reads information in the memory, and completes the operations of the methods in combination with hardware.

It can be understood that the memory in the embodiment of the disclosure may be a volatile memory or a nonvolatile memory, or may include both the volatile and nonvolatile memories. The nonvolatile memory may be a ROM, a PROM, an Electrically PROM (EPROM), an EEPROM or a flash memory. The volatile memory may be a RAM, and is used as an external high-speed cache. It is exemplarily but unlimitedly described that RAMs in various forms may be adopted, such as a Static RAM (SRAM), a Dynamic RAM (DRAM), a Synchronous DRAM (SDRAM), a Double Data Rate SDRAM (DDRSDRAM), an Enhanced SDRAM (ESDRAM), a Synchlink DRAM (SLDRAM) and a Direct Rambus RAM (DR RAM). It is to be noted that the memory of a system and method described in the disclosure is intended to include, but not limited to, memories of these and any other proper types.

In addition, terms "system" and "network" in the disclosure may usually be exchanged in the disclosure. In the disclosure, term "and/or" is only an association relationship describing associated objects and represents that three relationships may exist. For example, A and/or B may represent three conditions: i.e., independent existence of A, existence of both A and B and independent existence of B. In addition, character "/" in the disclosure usually represents that previous and next associated objects form an "or" relationship.

It is to be understood that, in the embodiments of the disclosure, "B corresponding to A" represents that B is associated with A and B may be determined according to A. It is also to be understood that determining B according to A does not mean that B is determined only according to A and B may also be determined according to A and/or other information.

Those of ordinary skill in the art may realize that the units and algorithm operations of each example described in combination with the embodiments disclosed in the disclosure may be implemented by electronic hardware or a combination of computer software and the electronic hardware. Whether these functions are executed in a hardware or software manner depends on specific applications and design constraints of the technical solutions. Professionals may realize the described functions for each specific application by use of different methods, but such realization shall fall within the scope of the disclosure.

Those skilled in the art may clearly learn about that specific working processes of the system, device and unit described above may be the corresponding processes in the method embodiment and will not be elaborated herein for convenient and brief description.

In some embodiments provided by the application, it is to be understood that the disclosed system, device and method may be implemented in another manner. For example, the device embodiment described above is only schematic, and for example, division of the units is only logic function division, and other division manners may be adopted during practical implementation. For example, multiple units or components may be combined or integrated into another system, or some characteristics may be neglected or not executed. In addition, coupling or direct coupling or communication connection between each displayed or discussed component may be indirect coupling or communication connection, implemented through some interfaces, of the device or the units, and may be electrical and mechanical or adopt other forms.

The units described as separate parts may or may not be physically separated, and parts displayed as units may or may not be physical units, and namely may be located in the same place, or may also be distributed to multiple network units. Part or all of the units may be selected to achieve the purpose of the solutions of the embodiments according to a practical requirement.

In addition, each function unit in each embodiment of the disclosure may be integrated into a processing unit, each unit may also exist independently, and two or more than two units may also be integrated into a unit.

When being realized in form of software functional unit and sold or used as an independent product, the function may also be stored in a computer-readable storage medium. Based on such an understanding, the technical solutions of the disclosure substantially or parts making contributions to the conventional art or part of the technical solutions may be embodied in form of software product, and the computer software product is stored in a storage medium, including a plurality of instructions configured to enable a computer device (which may be a personal computer, a server, a network device or the like) to execute all or part of the operations of the method in each embodiment of the disclosure. The abovementioned storage medium includes: various media capable of storing program codes such as a U disk, a mobile hard disk, a ROM, a RAM, a magnetic disk or an optical disk.

The above is only the specific implementation mode of the disclosure and not intended to limit the scope of protection of the disclosure. Any variations or replacements apparent to those skilled in the art within the technical scope disclosed by the disclosure shall fall within the scope of protection of the disclosure. Therefore, the scope of protection of the disclosure shall be subject to the scope of protection of the claims.

## Claims

1. A method for data transmission, **characterized by** comprising:
determining (210), by a network device, a numerology for transmission of data;
transmitting (220), by the network device, Downlink Control Information, DCI, to schedule the data of a terminal device, the DCI being used by the terminal device to determine the numerology for transmission of data according to a Cyclic Redundancy Check, CRC, code of the DCI;
transmitting (251), by the network device, the data to the terminal device according to the numerology and the DCI or receiving (252), by the network device, the data transmitted by the terminal device according to the numerology and the DCI;
wherein the numerology comprises at least one of:
a subcarrier spacing,
a number of subcarriers under a specific bandwidth,
a number of subcarriers in a Physical Resource Block, PRB,
an Orthogonal Frequency Division Multiplexing, OFDM, symbol length,
a number of points of Fourier transform or inverse Fourier transform configured to generate an OFDM signal,
a number of OFDM symbols in a Transmission Time Interval, TTI,
a number of TTIs in a specific time length, or
a length of a signal prefix.

2. The method of claim 1, wherein determining (210), by the network device, the numerology for transmission of the data comprises:
determining, by the network device, the numerology for transmission of the data from multiple predefined basic numerologies.

3. The method of claim 1 or 2, wherein transmitting (220), by the network device, the DCI to schedule the data of the terminal device comprises:
transmitting, by the network device, the DCI to schedule the data of the terminal device according to at least one parameter in the numerology.

4. The method of claim 1 or 2, wherein transmitting (220), by the network device, the DCI to schedule the data of the terminal device comprises:
determining, by the network device, a DCI format of the DCI according to the numerology and a mapping relationship between basic numerologies and DCI formats; and
transmitting, by the network device, the DCI to schedule the data of the terminal device according to the DCI format.

5. The method of claim 4, further comprising:
determining, by the network device, the mapping relationship between the basic numerologies and the DCI formats; and
transmitting, by the network device, indication information to the terminal device, the indication information being configured to indicate the mapping relationship between the DCI formats and the basic numerologies.

6. The method of claim 4 or 5, wherein different DCI formats correspond to different control information lengths.

7. The method of any one of claims 4-6, wherein DCI format indication bits in different DCI formats indicate different information.

8. The method of claim 4 or 5, wherein, when different DCI formats correspond to different basic numerologies and the different DCI formats comprise a same control information field, at least one of the following applies:
the same control information field occupies different numbers of bits in different DCI formats; or
the same control information field indicates different contents in the different DCI formats.

9. The method of claim 8, wherein the control information field comprises at least one of:
a control information field configured to indicate physical resource allocation,
a control information field configured to indicate an Acknowledgment, ACK,/Negative Acknowledgment, NACK, feedback timing,
a control information field configured to indicate frequency hopping configuration,
a control information field configured to indicate a Modulation Coding Scheme, MCS,
a control information field configured to indicate a subframe structure, or
a control information field configured to indicate Demodulation Reference Signal, DMRS, configuration.

10. A network device, **characterized by** comprising:
means for determining a numerology for transmission of configured to transmit data;
means for transmitting Downlink Control Information, DCI, to schedule the data of a terminal device, the DCI being used by the terminal device to determine the numerology for transmission of data according to a Cyclic Redundancy Check, CRC, code of the DCI;
means for transmitting the data to the terminal device according to the numerology and the DCI or receiving the data transmitted by the terminal device according to the numerology and the DCI;
wherein the numerology comprises at least one of:
a subcarrier spacing,
a number of subcarriers under a specific bandwidth,
a number of subcarriers in a Physical Resource Block, PRB,
an Orthogonal Frequency Division Multiplexing, OFDM, symbol length,
a number of points of Fourier transform or inverse Fourier transform configured to generate an OFDM signal,
a number of OFDM symbols in a Transmission Time Interval, TTI,
a number of TTIs in a specific time length, or
a length of a signal prefix.

11. The network device of claim 10, wherein means for determining the numerology for transmission of the data comprises:
means for determining the numerology for transmission of the data from multiple predefined basic numerologies.

12. The network device of claim 10 or 11, wherein means for transmitting the DCI to schedule the data of the terminal device comprises:
means for transmitting the DCI to schedule the data of the terminal device according to at least one parameter in the numerology.

13. The network device of claim 10 or 11, wherein means for transmitting the DCI to schedule the data of the terminal device comprises:
means for determining a DCI format of the DCI according to the numerology and a mapping relationship between basic numerologies and DCI formats; and
means for transmitting the DCI to schedule the data of the terminal device according to the DCI format.

14. A network device, **characterized by**, comprising:
a processor; and
a memory for storing executable instructions;
wherein the processor is configured to execute the executable instructions to implement the method for data transmission of any one of claims 1 to 9.

15. A computer-readable storage medium having stored thereon a program that when executed by a processor of a network device, causes the processor to perform the method for data transmission of any one of claims 1 to 9.
